# EUROPÄISCHE PATENTANMELDUNG

(11) **EP 3 796 752 A1**
(43) Veröffentlichungstag der Anmeldung: **24.03.2021**
(21) Anmeldenummer: 19198109.1
(22) Anmeldetag: 18.09.2019
(51) Int. Cl.: H05B 6/06, H05B 6/10, H05B 6/42, B29C 64/295

(54) **REGELUNG EINES INDUKTIONSHEIZSYSTEMS IN GENERATIVEN FERTIGUNGSVERFAHREN**

(71) Anmelder: Siemens Aktiengesellschaft, 80333 München (DE)
(72) Erfinder: Goldammer, Matthias, 80687 München (DE); Hanebuth, Henning, 85652 Pliening OT Gelting (DE)

(57) **Zusammenfassung**

Die Erfindung betrifft ein Verfahren, das eine in einem generativen Fertigungsverfahren in einem Bauteil 1 induzierte Heizleistung regelt. Die Heizleistung wird von einem Induktionsheizsystem induziert. Das erfindungsgemäße Regelungsverfahren basiert auf der Idee, die bisher unbekannte, tatsächlich im Bauteil 1 induzierte Heizleistung indirekt zu bestimmen. Dies gelingt dadurch, dass von der elektrischen Leistung, die in das Induktionsheizsystem hineingesteckt wird (nämlich die elektrische Leistung des Induktionsgenerators 11), die Leistungsverluste, die im Wesentlichen aus Abwärme an die Kühlflüssigkeit und an die übrige Umgebung bestehen, abgezogen werden. Die Leistungsverluste werden, soweit möglich, berechnet; hilfsweise können sie auch abgeschätzt werden.

## Beschreibung

Die Erfindung betrifft die Regelung eines Induktionsheizsystems in generativen Fertigungsverfahren. Sie betrifft insbesondere die Regelung einer in einem Bauteil induzierten Heizleistung. Die Erfindung betrifft ferner eine Regelungseinheit für ein Induktionsheizsystem, die dafür ausgestaltet ist, ein solches Verfahren durchzuführen.

Zur Verbesserung der Materialeigenschaften in einem generativen Fertigungsverfahren, z.B. mittels selektiven Laserschmelzens, kann eine zusätzliche Heizeinheit verwendet werden, die eine bessere Steuerung der Aufheizung und Abkühlung des Materials ermöglicht. Induktionsheizsysteme sind hierfür gut geeignet, da die Wärme nur in den bereits bearbeiteten Bereichen eingebracht wird und nicht auf das unbearbeitete Pulver wirkt. Allerdings wirken Induktionsheizsysteme nur lokal, nämlich beschränkt auf einen Bereich rund um den elektrischen Leiter der Induktionsspule, wodurch eine mechanische Verschiebung der Induktionsspule zur jeweils zu heizenden Stelle notwendig ist.

Die elektrischen Eigenschaften des Heizsystems, insbesondere ihre Induktivität und ihr ohmscher Widerstand, hängen dabei sowohl von der Position (Veränderung der Impedanz durch unterschiedliche Leitungslänge) und dem Bauteil unter der Spule (Wirbelströme im Bauteil) ab. Dadurch ändert sich sowohl die maximal mögliche Leistung, die der Induktionsgenerator zur Verfügung stellen kann, als auch der Wirkungsgrad der Induktionsheizung. Die Regelung der Temperatur kann diese unterschiedlichen Heizraten nicht berücksichtigen und muss daher mit konservativeren Parametern betrieben werden, als eigentlich möglich wäre.

In derzeit eingesetzten und in der Entwicklung befindlichen Induktionsheizsystemen ist die tatsächlich vorhandene Heizleistung im Bauteil unbekannt. Eine Regelung der von dem Induktionsgenerator vorgegebenen elektrischen Leistung basierend auf der tatsächlichen Heizleistung im Bauteil ist folglich nicht möglich.

Es ist Aufgabe der vorliegenden Erfindung, dies zu verbessern. Es soll insbesondere ein Regelungsverfahren zur Regelung der in dem Bauteil induzierten Heizleistung entwickelt werden.

Diese Aufgabe löst die vorliegende Erfindung, wie in den unabhängigen Ansprüchen offenbart. Die abhängigen Ansprüche geben besonders vorteilhafte Ausführungsformen der Erfindung wieder.

Demgemäß wird ein Verfahren vorgeschlagen, das eine in einem generativen Fertigungsverfahren in einem Bauteil induzierte Heizleistung regelt. Die Heizleistung wird von einem Induktionsheizsystem induziert. Das Induktionsheizsystem weist einen Induktionsgenerator und eine Induktionsspule auf. Die Induktionsspule ist mit dem Induktionsgenerator durch elektrische Zuleitungen verbunden. Die Zuleitungen sind mithilfe einer Kühlflüssigkeit gekühlt.

Das Regelungsverfahren umfasst die folgenden Schritte: Bestimmen der tatsächlich im Bauteil induzierten Heizleistung; Vergleich der tatsächlichen Heizleistung mit einem Zielwert; bei einer Abweichung der tatsächlichen Heizleistung von dem Zielwert, die größer als ein vorgegebener Schwellwert ist: Ändern der von dem Induktionsgenerator vorgegebenen elektrischen Leistung derart, dass die Abweichung zwischen der tatsächlichen Heizleistung und dem Zielwert kleiner als der vorgegebene Schwellwert ist.

Dabei umfasst die Bestimmung der tatsächlich im Bauteil induzierten Heizleistung die folgenden Teilschritte: Erfassen der vom Induktionsgenerator vorgegebenen elektrischen Leistung; Subtrahieren der Wärmeleistung, die als Abwärme an die Kühlflüssigkeit der Zuleitungen abgegeben wird; Subtrahieren der Wärmeleistung, die von den Zuleitungen an die übrige Umgebung, also abgesehen von der Kühlflüssigkeit, abgegeben wird.

Das erfindungsgemäße Regelungsverfahren basiert also auf der Idee, die bisher unbekannte, tatsächlich im Bauteil induzierte Heizleistung indirekt zu bestimmen. Dies gelingt dadurch, dass von der elektrischen Leistung, die in das Induktionsheizsystem hineingesteckt wird (nämlich die elektrische Leistung des Induktionsgenerators), die Leistungsverluste, die im Wesentlichen aus Abwärme an die Kühlflüssigkeit und an die übrige Umgebung bestehen, abgezogen werden. Die Leistungsverluste werden, soweit möglich, berechnet; hilfsweise können sie auch abgeschätzt werden.

Die von dem Induktionsgenerator vorgegebene elektrische Leistung kann in der Regel relativ einfach ausgelesen und verwertet werden.

Die Wärmeleistung, die als Abwärme an die Kühlflüssigkeit der Zuleitungen abgegeben wird, kann beispielsweise über die Durchflussrate der Kühlflüssigkeit durch die Kühlleitungen und die Temperaturdifferenz von Zu- und Ablauf berechnet werden: Die Temperaturdifferenz lässt sich in die von der Kühlflüssigkeit aufgenommene Abwärme umrechnen; aus der Durchflussrate lässt sich auf die abgegebene Wärmeleistung schließen.

Auch wenn in einem Induktionsheizsystem in der Regel alle zugänglichen Bereiche der elektrischen Zuleitungen flüssigkeitsgekühlt sind, lässt es sich erfahrungsgemäß dennoch nicht vermeiden, dass es auch Bereiche gibt, in denen Abwärme über die Umgebung, insbesondere über die Luft, abgegeben wird. Diese kann vorteilhafterweise über Temperatursensoren, die an den entsprechenden Stellen installiert sind, abgeschätzt werden.

Weist das Induktionsheizsystem weitere Komponenten auf, an denen Abwärme abgegeben wird, sollten diese bei der Bestimmung der tatsächlich im Bauteil induzierten Heizleistung auch berücksichtigt werden. In der Regel ist zum Beispiel zwischen dem Induktionsgenerator und dem Schwingkreis, den die Induktionsspule mit einem oder mehreren Kondensatoren bildet, ein Transformator zwischengeschaltet. Der Transformator hat die Funktion, die relativ hohe Spannung des Induktionsgenerators in eine im Vergleich dazu niedrige Spannung umzuwandeln, wodurch ein Anstieg der Stromstärke am Ausgang des Transformators einhergeht. Dies hat den Vorteil, dass eine relativ niedrige (effektive) Wechselspannung am Ausgang des Transformators, im sogenannten Arbeitskreis des Induktionsheizsystems, anliegt, aber eine hohe Stromstärke vorliegt. Die hohe Stromstärke, die durch die Induktionsspule fließt, ist wichtig, um eine hohe durch die Induktionsspule induzierte Heizleistung im Bauteil zu realisieren.

Ein solcher Transformator produziert immer auch ohmsche Verluste, also Abwärme. Diese können entweder mit dem Kühlsystem, das auch die Zuleitungen bis zur Induktionsspule kühlt, abgeführt werden. Dann sind diese Wärmeverluste bereits durch die Berücksichtigung der Wärmeleistung, die als Abwärme an die Kühlflüssigkeit der Zuleitungen abgegeben wird, berücksichtigt. Hat der Transformator jedoch ein eigenes Kühlsystem, ist auch die hier abgegebene Wärmeleistung bei der Bestimmung der tatsächlich im Bauteil induzierten Heizleistung zu berücksichtigen.

Das Induktionsheizsystem weist insbesondere eine Verschiebeeinheit auf, die die Verschiebung der Induktionsspule relativ zum Bauteil ermöglicht. Die Verschiebeeinheit umfasst beispielsweise eine oder mehrere Schienen, auf denen sich ein Schlitten entlang bewegen kann. Der elektrische Kontakt zwischen den Schienen und dem Schlitten ist zum Beispiel durch einen Schleifkontakt realisiert. Ein solches System aus Schienen und Schlitten kann in zwei zueinander senkrechten Richtungen vorgesehen sein, so dass eine Verschiebung der Induktionsspule über eine Fläche möglich ist.

Vorteilhafterweise beträgt die Gesamtzeit für die Durchführung der Schritte des Regelungsverfahrens höchstens 1 s (Sekunde), bevorzugt höchstens 200 ms (Millisekunden). Die Gesamtzeit umfasst dabei die Zeit für die Bestimmung der tatsächlich im Bauteil induzierten Heizleistung, also das Erfassen der vom Induktionsgenerator vorgegebenen elektrischen Leistung, das Subtrahieren der Wärmeleistung, die als Abwärme an die Kühlflüssigkeit der Zuleitungen abgegeben wird, und das Subtrahieren der Wärmeleistung, die von den Zuleitungen an die übrige Umgebung abgegeben wird. Daran schließt sich der Vergleich der tatsächlichen Heizleistung mit einem Zielwert an, der jedoch in der Regel keine nennenswerte Zeit in Anspruch nehmen dürfte. Die gegebenenfalls notwendige Anpassung, das heißt Änderung der Leistung des Induktionsgenerators, ist auch schnell geschehen. Bis sich die tatsächlich induzierte Leistung im Bauteil auf den gewünschten Wert einstellt, dauert es in der Regel etwas länger; diese Zeit ist nicht in dem angegebenen Zeitraum von 1 s umfasst.

Eine schnelle Bestimmung der induzierten Heizleistung ist wünschenswert, da dann eine ortsabhängige Information bezüglich der tatsächlich im Bauteil induzierten Wärme gewonnen werden kann, ohne dass die Verschiebung der Induktionsspule oder das generative Fertigungsverfahren selbst beeinträchtigt, insbesondere verlangsamt, werden muss.

Es ist ferner auch vorteilhaft, wenn in einem weiteren Schritt die tatsächlich im Bauteil induzierte Heizleistung in Abhängigkeit von der Position der Induktionsspule relativ zu dem Bauteil auf einer Speichereinheit abgespeichert wird.

Die positionsabhängige Speicherung der Leistungsdaten ermöglicht neben einer verbesserten reaktiven Regelung auch die direkte Vorsteuerung der Heizung für eine schnellstmögliche Aufheizrate.

Die Daten werden positionsabhängig gespeichert und können für die nächste zu bearbeitende Schicht als Eingangsgröße in die Regelung einbezogen werden. Da die Induktionsheizung nicht nur auf die aktuelle Schicht wirkt, sondern eine frequenzabhängige Eindringtiefe im Bereich von Millimetern hat, können die Daten der vorherigen Schicht für Regelung der nächsten Schicht verwendet werden. Ein weitere Verbesserung wird erzielt, wenn die Daten von mehreren Schichten innerhalb der Eindringtiefe der Induktionsheizung berücksichtigt werden (z.B. durch tiefengewichtete Mittelung). Hier stellt allerdings die knappe Zeitspanne, in der diese Berechnung möglichst ausgeführt werden sollte, in der Praxis eine Herausforderung dar.

Bei einer Serienproduktion von Bauteilen können die Daten auch gespeichert werden und ermöglichen zusätzlich eine Offline-Optimierung der Regelung des Induktionsheizsystems.

Schließlich umfasst die Erfindung nicht nur das Regelungsverfahren an sich, sondern auch eine Regelungseinheit für ein Induktionsheizsystem, die dafür ausgestaltet ist, das genannte Verfahren durchzuführen.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: eine Vorrichtung zur generativen Fertigung eines Bauteils mit einer Induktionsheizeinrichtung; und
- Fig. 2:: ein Flussdiagramm des Regelungsverfahrens eines Induktionsheizsystems in generativen Fertigungsverfahren.

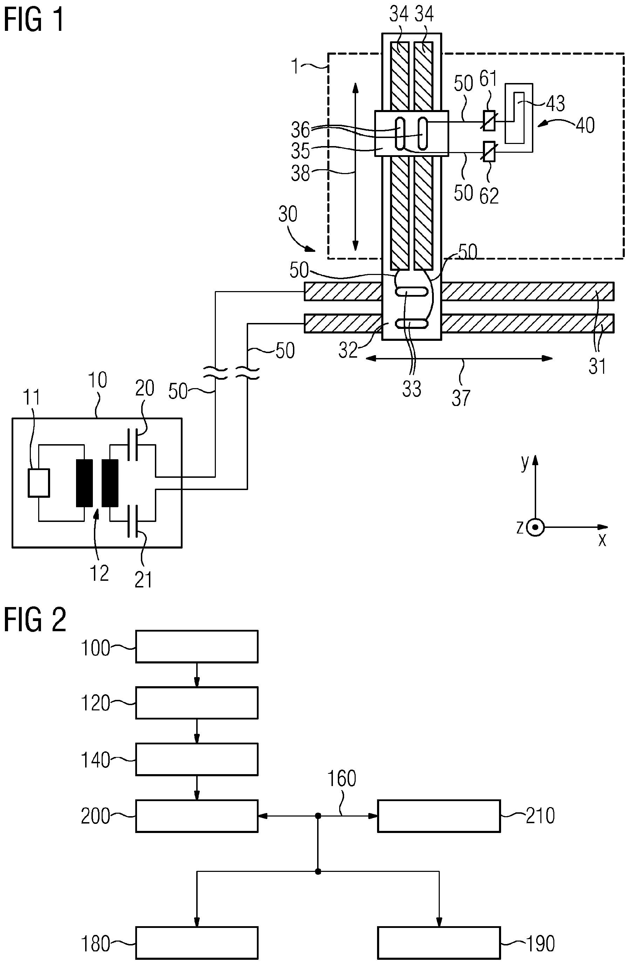

Die Abbildung 1 (auch als Fig. 1 bezeichnet) zeigt eine Vorrichtung zur generativen Fertigung eines Bauteils 1 mit einer Induktionsheizeinrichtung. Die Vorrichtung umfasst eine Plattform, die dazu vorgesehen ist, um darauf einen pulver- oder drahtförmigen metallischen Werkstoff schichtweise aufzutragen sowie eine Primärheizeinrichtung, die dazu ausgebildet ist, einen auf die Plattform aufgetragenen pulver- oder drahtförmigen metallischen Werkstoff aufzuschmelzen. Diese Bestandteile der Vorrichtung sind Standardbestandteile einer Anlage zur generativen Bauteilfertigung (auch: additive Fertigung oder 3D-Druck) und sind in der Fig. 1 aus Gründen der Übersichtlichkeit nicht gezeigt. Ihre Ausgestaltung und Verbindung zueinander sind dem Fachmann auf dem Gebiet der generativen Fertigung, insbesondere des Selektiven Laserschmelzens, wohlbekannt.

Die Vorrichtung weist ferner eine Induktionsheizeinrichtung zum Erwärmen des Werkstoffes auf. Sowohl das Vorwärmen des noch nicht aufgeschmolzenen Werkstoffes als auch das Nachbehandeln des bereits aufgeschmolzenen Werkstoffes sind mit der Induktionsheizeinrichtung möglich. Prinzipiell ist auch ein induktives Erwärmen des metallischen Werkstoffes während des Aufschmelzens mittels beispielsweise einer Laserstrahl- oder Elektronenstrahlquelle möglich.

Die Induktionsheizeinrichtung weist eine Wechselspannungsversorgungseinrichtung 10 auf, die aus einem Induktionsgenerator 11 und einem Transformator 12 besteht. Der Induktionsgenerator 11 erzeugt Wechselspannung mit einer effektiven Spannung von mehreren Hundert Volt bis zu einigen Kilovolt. Die Stromstärke ist dabei moderat und beträgt beispielsweise zwischen 10 A und 100 A. Um eine hohe Heizleistung durch die Induktionsspule zu erreichen, muss diese von einer hohen Stromstärke, die insbesondere höher als 100 A ist, durchflossen werden. Aus diesem Grund ist an den Induktionsgenerator 11 ein Transformator 12 angeschlossen. Der Transformator 12 wandelt die hohe Spannung des Induktionsgenerators 11 in eine niedrigere Spannung um, was direkt einen Anstieg der Stromstärke in dem Stromkreis am Ausgang des Transformators 12 zur Folge hat. Der Stromkreis am Eingang des Transformators 12 wird auch als "Generatorkreis" bezeichnet; der Stromkreis am Ausgang des Transformators 12 als "Arbeitskreis".

Die Wechselspannungsversorgungseinrichtung 10 ist mittels elektrischer Leitungen, die im Rahmen dieser Anmeldung auch als Zuleitungen 50 bezeichnet werden, mit einer Verschiebeeinheit 30 verbunden. Die Verschiebeeinheit 30 hat den Zweck, die sich an sie anschließende Induktionsspule 40 verschiebbar bezüglich einem ruhenden Bauteil 1 zu gestalten. Hierfür sind ein erster Schlitten 32 und ein zweiter Schlitten 35 jeweils mittels einer Steuereinrichtung ansteuerbar. Die Steuereinrichtung für die Verschiebeeinheit 30 ist aus Gründen der Übersichtlichkeit nicht in Fig. 1 gezeigt und auch in dieser Beschreibung wird darauf nicht näher eingegangen, da sie nicht den Kern dieser Erfindung betrifft.

Der erste Schlitten 32 befindet sich mittels zweier erster Schleifkontakte 33 auf einem ersten Schienenpaar 31. Die Schleifkontakte 33 sind beispielsweise aus einem elektrisch hochleitfähigen Metall, ebenso die beiden Schienen des ersten Schienenpaars 31. Als geeignetes Material für die Schleifkontakte 33 und das Schienenpaar 31 ist zum Beispiel Kupfer zu nennen. Die ersten Schleifkontakte 33 sind ihrerseits wiederum mittels elektrischer Leiter 50 mit einem zweiten Schienenpaar 34 verbunden. Das zweite Schienenpaar 34 bildet die Auflagefläche für den zweiten Schlitten 35, dessen zweite Schleifkontakte 36 mit den Schienen des zweiten Schienenpaars 34 elektrisch verbunden sind. Die zweiten Schleifkontakte 36 sind mittels Zuleitungen 50 mit der Induktionsspule 40 verbunden. Der erste Schlitten 32 ist entlang einer ersten Verschiebungsrichtung 37 hin und her bewegbar (hier entsprechend der x-Richtung); der zweite Schlitten 35 ist entlang einer zweiten Verschiebungsrichtung 38 hin und her bewegbar (hier entsprechend der y-Richtung). Für die Induktionsspule 40 folgt daraus, dass diese in einem durch die Verschiebeeinheit 30 definierten Bereich (oder: Fläche) verschiebbar ist.

Die Induktionsspule 40 ist in Fig. 1 (wie auch z.B. die Wechselspannungsversorgungseinrichtung 10) nicht maßstäblich gegenüber den übrigen Komponenten gezeichnet. Sie wird in den meisten realen Fällen deutlich kleiner sein. Der Übersichtlichkeit halber ist sie aber in Fig. 1 als große, doppelt gewundene Spule gezeichnet. Die Induktionsspule definiert dabei durch ihr Spuleninneres ein Fenster 43, durch das vorteilhafterweise ein Laserstrahl auf den zu bearbeitenden Werkstoff hindurchtreten kann.

Ein weiterer Bestandteil des Induktionsheizsystems ist ein Kondensator 20, der zusammen mit der Induktionsspule 40 einen Reihenschwingkreis, auch als Serienschwingkreis oder RCL-Schwingkreis bezeichnet, bildet. Aufgrund der hohen Ströme, die durch die Induktionsspule 40 fließen, ist die Induktivität der Spule hoch und die Kapazität des Kondensators 20 muss entsprechend groß gewählt werden. Daraus folgen eine gewisse bauliche Größe und Gewicht des Kondensators 20. Der Kondensator 20 ist folglich in die Wechselspannungsversorgungseinrichtung 10 mit verbaut worden, da die Wechselspannungsversorgungseinrichtung 10 mit Induktionsgenerator 11 und Transformator 12 ohnehin viel Platz und auch Gewicht beanspruchten.

In der in Fig. 1 gezeigten Ausführungsform weist das Induktionsheizsystem noch einen zweiten Kondensator auf, der auch als Zusatzkondensator 21 bezeichnet wird. Dieser dient im Wesentlichen als zusätzlicher Kondensator, um mehr Flexibilität zu haben, um die Kapazität des Schwingkreises einzustellen.

Der Induktionsgenerator 11, der Transformator 12, der Kondensator 20 und der Zusatzkondensator 21 sind zum Schutz von einem gemeinsamen Gehäuse umgeben.

Ferner weist das Induktionsheizsystem einen ersten Temperatursensor 61 und einen zweiten Temperatursensor 62 auf. Beide Temperatursensoren 61, 62 sind an den Zuleitungen 50 zwischen dem zweiten Schlitten 35 und der Induktionsspule platziert. Der Grund hierfür ist, dass in diesem (kurzen) Teil der elektrischen Zuleitungen 50 (beispielhaft) eine unzureichende Wasserkühlung der Zuleitungen 50 vermutet wird. Um die Wärmeleistung, die an die Umgebung, das heißt die Luft, abgegeben wird, quantitativ zu erfassen, messen die Temperatursensoren 61, 62 die Temperatur der Luft. Durch einen Vergleich der gemessenen Temperatur mit der Raumtemperatur kann auf die abgegebene Wärmeleistung geschlossen werden, und diese von der anfangs vom Induktionsgenerator 11 eingespeisten elektrischen Leistung abgezogen werden.

Die Abbildung 2 (auch als Fig. 2 bezeichnet) zeigt ein Flussdiagramm des erfindungsgemäßen Verfahrens zur Regelung der in einem Bauteil 1 induzierten Heizleistung eines Induktionsheizsystems.

In einem ersten Schritt 100 wird die von dem Induktionsgenerator 11 eingespeiste (in anderen Worten: vorgegebene) elektrische Leistung erfasst. Im einfachsten Fall kann hierfür einfach der Wert der Leistung genommen werden, der am Induktionsgenerator 11 abgelesen wird. Alternativ können separat Spannung und Stromstärke im Generatorkreis gemessen und daraus die vom Induktionsgenerator 11 eingespeiste Leistung berechnet werden.

In einem zweiten Schritt 120 wird davon die Wärmeleistung, die als Abwärme an die Kühlflüssigkeit der Zuleitungen 50 abgegeben wird, abgezogen. In vielen praktischen Fällen weist das Induktionsheizsystem ein einziges Kühlsystem für sämtliche Zuleitungen 50 auf. Hiermit sind zum einen die elektrischen Leitungen gemeint, die die Wechselspannungsversorgungseinrichtung 10 mit der Verschiebeeinheit 30 verbinden. Dies können feste Leitungen, z.B. Kupferleitungen, sein. Dies können auch biegbare Kabel sein, deren Äußeres von Kühlwasser umflossen sind. Zum anderen existieren auch zwischen der Verschiebeeinheit 30 und der Induktionsspule 40 Zuleitungen, die in der Regel flüssigkeitsgekühlt sind. Schließlich sind auch einzelne Komponenten der Verschiebeeinheit 30, insbesondere die Schienenpaare 31, 34 sowie die Verbindung der ersten Schleifkontakte 33 mit dem zweiten Schienenpaar 34 und die Verbindung der zweiten Schleifkontakte 36 mit der Induktionsspule 40, flüssigkeitsgekühlt.

Anhand der Differenz der Temperatur von Zulauf und Ablauf der Kühlflüssigkeit und der Durchflussrate durch die Leitungen des Kühlsystems kann die Wärmeleistung berechnet werden, die von den Zuleitungen 50 in die Kühlflüssigkeit eingebracht wird, und somit für die Heizleistung des Bauteils 1 verloren geht.

In einem dritten Schritt 140 werden jegliche weitere Verluste des Induktionsheizsystems, die in Form von Abwärme an die übrige Umgebung abgegeben werden, erfasst und von der ursprünglich eingespeisten elektrischen Leistung abgezogen. Zur Abschätzung dieser Verluste werden vorteilhafterweise in den betroffenen Bereichen Temperatursensoren platziert, wie dies in dem beispielhaften Aufbau von Fig. 1 mit den beiden Temperatursensoren 61, 62 gezeigt ist.

Im Ergebnis erhält man eine Abschätzung (in anderen Worten: Bestimmung) für die in das Bauteil 1 eingebrachte Heizleistung.

Dieser Wert 200 wird in einem vierten Schritt 160 mit einem Zielwert 210 verglichen. Der Zielwert 210 stellt die induzierte Heizleistung dar, die angepeilt bzw. gewünscht oder gefordert ist.

Weicht die abgeschätzte tatsächliche Heizleistung 200 im Bauteil 1 von dem Zielwert 210 um einen Betrag ab, der größer als ein vorgegebener Schwellenwert ist, wird in einem letzten Schritt 180 die elektrische Leistung, die vom Induktionsgenerator 11 in das System eingespeist wird, geändert (entweder erhöht oder reduziert). Weicht hingegen die abgeschätzte tatsächliche Heizleistung 200 im Bauteil 1 von dem Zielwert 210 um einen Betrag ab, der kleiner als oder gleich wie ein vorgegebener Schwellenwert ist, wird in einem letzten Schritt 190 nichts gemacht, insbesondere die elektrische Leistung des Induktionsgenerators 11 nicht angepasst.

Mithilfe dieses Verfahrens ist eine positionsabhängige Bestimmung der tatsächlich im Bauteil induzierten Heizleistung möglich. Dies kann genutzt werden, um erstmalig reaktiv und/oder vorausschauend die Heizleistung während des generativen Fertigungsverfahrens anzupassen. Des Weiteren können direkt und dynamisch Rückschlüsse auf die Effizienz des Induktionsheizsystems gewonnen werden.

## Patentansprüche

1. Verfahren zur Regelung einer in einem generativen Fertigungsverfahren in einem Bauteil (1) induzierten Heizleistung eines Induktionsheizsystems, wobei das Induktionsheizsystem einen Induktionsgenerator (11) und eine Induktionsspule (40) aufweist und die Induktionsspule (40) mit dem Induktionsgenerator (11) mit mittels einer Kühlflüssigkeit gekühlten elektrischen Zuleitungen (50) verbunden ist, das Regelungsverfahren umfassend die Schritte:
- Bestimmen der tatsächlich im Bauteil (1) induzierten Heizleistung (200),
- Vergleich (160) der tatsächlichen Heizleistung (200) mit einem Zielwert (210), und
- bei einer Abweichung der tatsächlichen Heizleistung (200) von dem Zielwert (210), die größer als ein vorgegebener Schwellwert ist, Ändern (180) der von dem Induktionsgenerator (11) vorgegebenen elektrischen Leistung derart, dass die Abweichung zwischen der tatsächlichen Heizleistung (200) und dem Zielwert (210) kleiner als der vorgegebene Schwellwert ist,
wobei die Bestimmung der tatsächlich im Bauteil (1) induzierten Heizleistung (200) die folgenden Teilschritte umfasst:
- Erfassen (100) der vom Induktionsgenerator (11) vorgegebenen elektrischen Leistung,
- Subtrahieren (120) der Wärmeleistung, die als Abwärme an die Kühlflüssigkeit der Zuleitungen (50) abgegeben wird, und
- Subtrahieren (140) der Wärmeleistung, die von den Zuleitungen (50) an die übrige Umgebung abgegeben wird.

2. Verfahren nach Anspruch 1,
wobei das Induktionsheizsystem ferner einen Transformator (12) aufweist und der Transformator (12) die von dem Induktionsgenerator (11) erzeugte Spannung als Eingangswechselspannung aufnimmt und diese in eine Ausgangswechselspannung umwandelt.

3. Verfahren nach Anspruch 2,
wobei der Transformator (12) ebenfalls gekühlt wird und die Bestimmung der tatsächlich im Bauteil (1) induzierten Heizleistung (200) den weiteren folgenden Teilschritt umfasst:
- Subtrahieren der Wärmeleistung, die als Abwärme an die Kühlung des Transformators (12) abgegeben wird.

4. Verfahren nach einem der vorhergehenden Ansprüche,
wobei die Wärmeleistung, die als Abwärme an die Kühlflüssigkeit der Zuleitungen (50) abgegeben wird, mittels der Durchflussrate der Kühlflüssigkeit durch das Kühlflüssigkeitssystem und der Differenz zwischen der Temperatur des Zulaufs und der Temperatur des Ablaufs berechnet wird.

5. Verfahren nach einem der vorhergehenden Ansprüche,
wobei die Wärmeleistung, die von den Zuleitungen (50) an die Umgebung, abgesehen von der Kühlflüssigkeit, abgegeben wird, basierend auf den Messwerten von Temperatursensoren (61, 62), die an entsprechenden Stellen an den Zuleitungen (50) platziert sind, berechnet wird.

6. Verfahren nach einem der vorhergehenden Ansprüche,
wobei die Gesamtzeit für die Bestimmung der tatsächlich im Bauteil (1) induzierten Heizleistung (200) höchstens 1 s, bevorzugt höchstens 200 ms, beträgt.

7. Verfahren nach einem der vorhergehenden Ansprüche,
wobei das Induktionsheizsystem ferner eine Verschiebeeinheit (30) aufweist, die die Verschiebung der Induktionsspule (40) relativ zum Bauteil (1) ermöglicht.

8. Verfahren nach Anspruch 7,
wobei in einem weiteren Schritt die tatsächlich im Bauteil (1) induzierte Heizleistung (200) in Abhängigkeit von der Position der Induktionsspule (40) relativ zu dem Bauteil (1) auf einer Speichereinheit abgespeichert wird.

9. Regelungseinheit für ein Induktionsheizsystem, die dafür ausgestaltet ist, das Verfahren nach einem der vorhergehenden Ansprüche durchzuführen.
